# EUROPEAN PATENT SPECIFICATION

(11) **EP 2 256 067 B1**
(45) Date of publication and mention of the grant of the patent: **09.01.2013**
(21) Application number: 08706469.7
(22) Date of filing: 03.02.2008
(51) Int. Cl.: B65D 81/00, B65D 88/04, B65D 88/06, B65D 88/12, B65D 90/02, B65D 90/16, B65D 90/22, B65D 90/32, A62C 3/06, F17C 13/00

(54) **Explosion-proof storage tank**
Explosionssicherer Lagertank
Réservoir anti-déflagration

(43) Date of publication of application: 01.12.2010
(73) Proprietor: SHANGHAI HUAPENG EXPLOSION- PROOF SCIENCE AND TECHNOLOGY CO., LTD., Shanghai 200030 (CN)
(72) Inventor: HUANG, Xiaodong, Beijing 100009 (CN)
(74) Representative: Müller Schupfner & Partner
(86) International application number: PCT/CN2008/000288
(87) International publication number: WO 2009/100573

(56) References cited:
- WO-A1-2007/147316
- BE-A- 570 366
- CN-A- 1 501 016
- CN-A- 1 651 289
- CN-Y- 2 921 544
- DE-U1- 20 023 859
- US-A- 4 925 053
- US-B1- 6 178 991

## Description

### Field of the Invention

The present invention relates to an explosion-proof storage tank, in particular, to an explosion-proof oil(gas) storage tank used for storage of inflammable and/or explosive gaseous and/or liquid dangerous chemical medium.

### Description of the Prior art

At present, the available domestic storage tanks are rich in forms and great in varieties. In terms of pressure condition, the storage tanks can be classified as atmospheric tanks and pressure-bearing tanks. In terms of the installation location, the storage tanks , can be fallen into ground type, underground type or vehicle/ship mounted type. For the safety of storage tank, it is necessary to fill explosion-proof material in the tank so as to prevent the medium stored in the storage tank, such as inflammable and or explosive dangerous chemicals in liquid or gaseous state, from leading to combustion or explosion hazard due to unexpected accidents such as static electricity, naked flame and gunshot.

The available explosion-proof material is a kind of reticular lamellar material, which is rolled into cylinder body and then filled into the tank one by one. This kind of explosion-proof material has been disclosed in the document of Chinese patent No. ZL 92102437. Due to long-term immersion, the rolled materials located at the lower part of the tank carry very large load and the mutual stacking and extrusion between materials and result in the distortion and collapse of materials, generating strong impact on the barrier and explosion-proof abilities of materials. As a result, an explosive space will be formed at the upper part of the tank, which tends to cause combustion and explosion. Meanwhile, most of the available explosion-proof materials are of metal nature, and they are likely to generate fragments due to the uneven loading on materials upon occurrence of flow surge of medium in the storage tank, thus bringing about certain impact on the properties of the content of storage tank.

In addition, due to small volume of the storage tanks, the available explosion-proof materials filled in the small-volume storage tanks are generally featured by spherical structure, big packing density and big space occupation.

Although it is practical to avoid the accident of "boiling liquid expanding-vapor explosion, BLEVE for short" of LPG tank when an explosion-proof material is filled in the LPG tank, such explosion-proof material is likely to collapse after long-term use, and the explosion-proof effect cannot be achieved in the same way.

A explosion-proof storage tank has been disclosed in the document of patent No. Wo2007147316. The explosion-proof storage tank comprises a tank body 1, in which the inner chamber of the tank body is filled with an explosion-proof material 31, said explosion-proof material 31 being multi-layer explosion-proof material unit made of high porosity material, a fixed supporting part 311 being provided in the unit to fix and support the unit, a plurality of units being orderly filled in the inner chamber of the storage tank.

Practice has proved that the available explosion-proof materials filled in different kinds of storage tanks cannot meet the requirement for explosion proof.

### Summary of the Invention

The first technical object of the present invention is to provide an explosion-proof storage tank, aiming at overcoming the deficiency of prior art. With reasonable filling method and filling structure the unit of explosion-proof material with fixed supporting part is filled into the tank to effectively prevent the collapse and distortion of high porosity flaky material in tank and be enable the unit to have adequate strength and elasticity so that the material unit can effectively prevent the unexpected explosion hazards that may be caused by naked flame, static electricity, welding, gunshot, collision and faulty operation, thus ensuring the entity safety of tank.

The second technical object of the present invention is to provide an explosion-proof storage tank, aiming at overcoming the deficiency of prior art. Because each of the explosion-proof material unit is covered with a metal protective mesh, the harmful effect caused by the fragments on the content medium in tank is effectively prevented.

The third technical object of the present invention is to provide an explosion-proof storage tank, aiming at overcoming the deficiency of prior art. By means of the skid set on the outside of the storage tank, the storage tank may be fixed on various positions such as ground position, underground position, container, vehicle/ship mounted position, so as to save area, facilitate disassembly and assembly and cut cost.

Said technical objects of the present invention are achieved by means of the technical solutions described as follows:
An explosion-proof storage tank comprises tank body in which an inner chamber is filled with explosion-proof material, said explosion-proof material being multi-layer explosion-proof unit made of high porosity material, said unit having fixed supporting part which is provided to fix and support the unit, a plurality of units being orderly filled in the inner chamber of storage tank.

Said unit is made of high porosity flaky materials. Said fixed supporting part is a skeleton set in the clearance between two layers of high porosity flaky materials of this unit, and this skeleton is designed for fixing and supporting the unit.

Said skeleton may be formed by interweaving a supporting frame and a reinforcing ring. The reinforcing ring is in the middle of the supporting frame and is mutually fixed with it, with the shape of skeleton corresponding to that of the unit. Said skeleton may be composed of an upright column and a crossbeam. The upright column is threaded between multiple-layer high porosity flaky materials of unit and protrudes from the upper and lower end faces of unit, and the crossbeam is connected with the parts of the upright column protruding from the upper and lower end faces of unit. Said skeleton may also be composed of multiple frames, which are set between multilayer high porosity flaky materials of unit and are connected with each other at top and bottom. Said skeleton may also be composed of two parts, namely upper skeleton and lower skeleton, which respectively include mutually connected end frames and inserting frames. Said end frames are respectively set on the upper and lower end faces of the unit, and said inserting frames are inserted and extended between multilayer high porosity flaky materials of unit, so as to fix and support the unit.

To prevent metal fragments from being left into the tank and causing harmful effect on the content medium in the tank, each of the units is covered with a metal protective mesh.

Said storage tank is atmospheric storage tank, portable storage tank with volume of 5 - 25 liter or automobile oil tank with volume of 50 - 200 liter. A prefabricated frame is provided in the inner chamber of storage tank. The shape and dimension of the prefabricated frame correspond to the inner chamber of portable storage tank or automobile oil tank. Explosion-proof material units are filled in the prefabricated frame to form a filling body in which a functional channel is reserved. A sleeve with sieve meshes is provided in the functional channel to facilitate the circulation of medium.

Said storage tank is an atmospheric double walled tank. High porosity flaky material is filled in the interlayer composed of two-layer tank walls. A vertical well is positioned in said tank, and the top of the well is set on the position corresponding to manhole cover in the tank. This vertical well is a frame that vertically penetrates along the radial direction of the tank. The bottom of the vertical well is connected with the cleaning tunnel set at the bottom of the tank. More than one of the internal bladders are set in the frame of vertical well, and each of the bladders is filled with the unit. A plurality of units are filled in the chamber of storage tank around the vertical well, with two adjacent units being interconnected or not connected.

Said storage tank is provided with a skid on its outside. By means of the skid, this storage tank is fixed on an anti-collision foundation to form a ground type storage tank. By means of the skid, this storage tank may also be connected with the base of underground tank pool to form an underground storage tank. By means of the skid, the storage tank may also be connected with the fixed platform of vehicle body or ship hull to form a vehicle/ship mounted storage tank. By means of the skid, the storage tank may also be fixed on the inner bottom plate of a container to form a container type storage tank. Or by means of the skid, the storage tank is fixed on the transport tanker to form a tanker storage tank.

Said storage tank is an atmospheric cylindrical storage tank for large scale oil storage region. A mounting support is set inside of the storage tank, and the shape and dimension of the mounting support correspond to the inner chamber of the storage tank. This mounting support is composed of a plurality of supporting rods to form gridirons. The explosion-proof material units are filled in the gridirons. The top of the supporting rod is firmly propped on the inner wall of the tank. A plurality of the units are orderly fixed in the gridiron of mounting support. A functional channel is reserved in the inner chamber of the storage tank, in which a sleeve composed of perforated plates is set. The space in the sleeve is used to accommodate such devices as process tube, dipping tube, the connecting rod of liquid level meter and the pipeline channel of buoy and breather valve.

Said atmospheric tank body is made of metal material or non-metal material or steel-plastic composite material.

Said storage tank is a small-type pressure bearing storage tank with volume less than 50 m³. A plurality of explosion-proof material units are orderly filled in the inner chamber of the storage tank and filled over the tank.

Said storage tank is a large pressure-bearing spherical tank , in which the mounting support is provided. The shape and dimension of the mounting support correspond to the inner chamber of the storage tank. The mounting support forms a spherical frame. The mounting support is composed of a plurality of supporting rods, each of which is firmly propped on the inner wall of the tank. With a metal grid being set on the mounting support, a plurality of units are orderly fixed on the metal grid of the mounting support to form a spherical annular explosion-proof layer in combination with the inner wall of storage tank.

Said storage tank is a pressure-bearing single walled liquefied petroleum gas storage tank, which can bear pressure of 1.8MPa ; or said storage tank is a pressure-bearing single walled natural gas storage tank, which can bear pressure of 20 - 30MPa.

To sum up, the beneficial effects of the present invention include: With reasonable filling mode and filling structure, the explosion-proof material units with fixed supporting part are filled in the tank, so as to effectively prevent the high porosity material filled in the tank from collapse and distortion and to enable the units to have adequate strength and elasticity. The metal protective mesh covered outside the unit can effectively prevent the fragments generated by the explosion-proof material unit in using process from being left in the tank body and blocking the oil (gas) pipeline, and can effectively prevent the fragments from flowing into the pipeline of oil (gas) refueling machine and can prevent from causing harmful effect. By means of the skid set outside the storage tank, the storage tank may be fixed on different positions for achieving various structure forms such as ground, underground, container and vehicle/ship mounted storage tank, so as to save area, facilitate disassembly and assembly and cut cost.

The technical solution of the present invention is further elaborated below in combination with the attached figures and embodiments.

### Brief Description of the Drawings

Figure 1 is the overall structure scheme of the portable storage tank of embodiment 1 of present invention;
Figure 2 is the overall structure scheme of the first explosion-proof material unit;
Figure 3 is the structure scheme of the first skeleton;
Figure 4 is the structure scheme of the second skeleton;
Figure 5 is the structure scheme of the setting mode 1 for the second skeleton;
Figure 6 is the structure scheme of the setting mode 2 for the second skeleton;
Figure 7 is the structure scheme of the setting mode 3 for the second skeleton;
Figure 8 is the structure scheme of the combined setting of the first and the second skeleton;
Figure 9 is the structure scheme of the third skeleton;
Figure 10 is the structure scheme of the fourth skeleton;
Figure 11 is the structure scheme of the fifth skeleton;
Figure 12 is the overall structure scheme of the second explosion-proof material unit being not part of the present invention ;
Figure 13 is the overall structure scheme of the third explosion-proof material unit being not part of the present invention ;
Figure 14 is the schematic diagram for bonding multilayer flat original foil materials ;
Figure 15 is the schematic diagram for setting the bonding points on each piece of flat original foil material ;
Figure 16 is the structure scheme of multi-layer flat original foil materials after bonding as well as the cutting position;
Figure 17 is the structure scheme of a metal mesh ;
Figure 18 is the overall structure scheme of the atmospheric double-walled ground storage tank of embodiment 2 ;
Figure 19 is the structure scheme of the unit of present invention, the outside of which is covered with a metal protective mesh;
Figure 20 is the overall structure scheme of the cylindrical oil-storage tank for large-scale oil storage region of embodiment 3 of present invention;
Figure 21 is the overall structure scheme of the pressure-bearing single wall gas storage tank of embodiment 4 of present invention;
Figure 22 is the overall structure scheme of the large-scale liquefied petroleum gas explosion proof spherical tank of embodiment 5 of present invention.

### Detailed Description of the Preferred Embodiments

### Embodiment 1

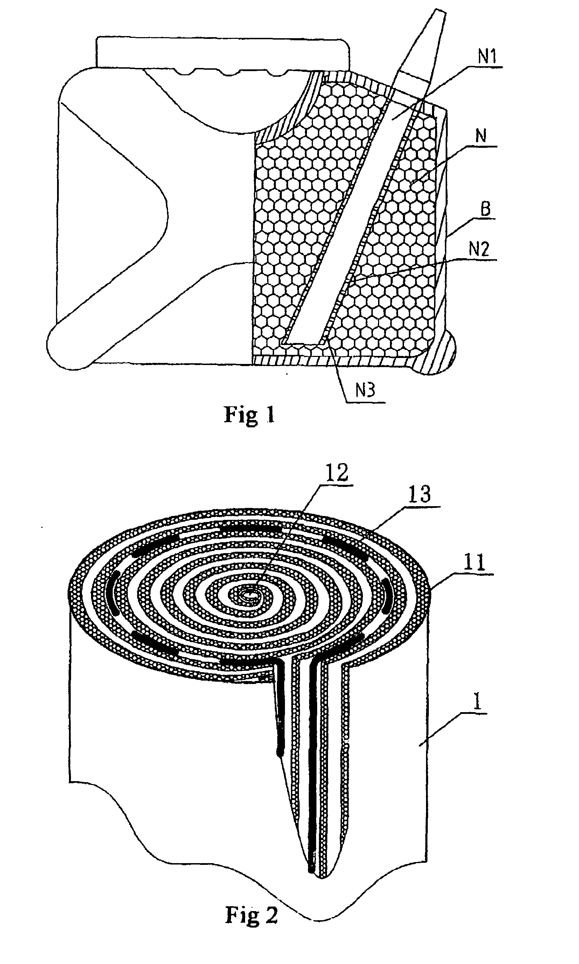

Figure 1 is the overall structure scheme of the portable storage tank of embodiment 1 of present invention. As shown in Figure 1, with respect to the portable storage tank B provided in this embodiment, a prefabricated frame (Not shown in the Figure) is set in the tank body. The shape and dimension of this prefabricated frame correspond to the inner chamber of portable storage tank B. The explosion-proof material units are filled in the prefabricated frame to form a filling body N. A functional channel N1 is reserved on the filling body N. A sleeve N2 with sieve meshes is set in the functional channel N1. The sieve meshes N3 opened on the sleeve can facilitate the circulation of medium and also prevent the channel from distortion due to mutual extrusion among explosion-proof material units.

The manufacture process for the portable storage tank B is described as follows: Firstly, fabricating the prefabricated frame with its shape and dimension corresponding to the inner chamber of portable storage tank B. Filling explosion-proof material units in the prefabricated frame to form a filling body N. Reserving the functional channel N1 in the filling body N. Placing the sleeve N2 in the functional channel N1, then loading the filling body N into the corresponding storage tank B, and Finally, sealing the lower surface of the storage tank so as to form a completely filled portable storage tank B.

The major technical characteristics of said explosion-proof material units have been disclosed in detail in the previous PCT application titled "An explosion-proof material and its processing method"(with application number of "PCT / CN2007 / 002299". Figure 2 is the overall structure scheme of the first explosion-proof material unit. As shown in Figure 2, the explosion-proof material unit 1 comprises a high porosity flaky material 11. With one side 12 of the high porosity flaky material 11 as center, it is rolled into a multi-layer explosion-proof material unit 1 along the direction perpendicular to the side. A fixed supporting part is set in the unit 1. To be specific, this fixed supporting part is a skeleton 13 inserted in the clearance between two layers of multilayer high porosity flaky material 11 of unit 1, so that the unit 1 has adequate strength and elasticity.

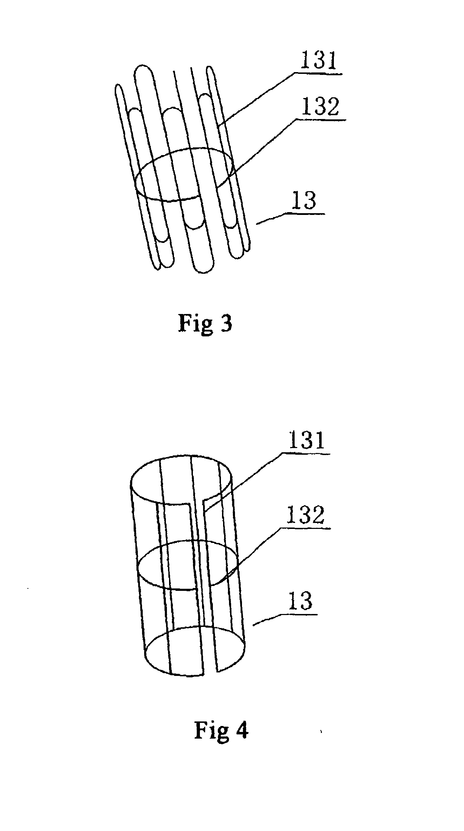

As shown in Figures 3 and 4, according to different requirements, the skeleton 13 may be designed in different structure forms. For example the skeleton 13 may be composed of interweaved supporting frame 131 and reinforcing ring 132. The reinforcing ring 132 is threaded in the middle of the supporting frame 131 and is mutually fixed with it, with the shape of skeleton 13 corresponding to that of unit 1. The supporting frame 131 may be designed as undulated or rectangle frame. To guarantee that the skeleton 13 has preferable supporting and fixing functions for the explosion-proof material unit 1, it is advisable to adopt elastic material to make the skeleton 13. In addition, the skeleton 13 may also be made one of the metal material, non-metal material, composite materials or the materials acquired by metal/ nonmetal coating technology or their combination.

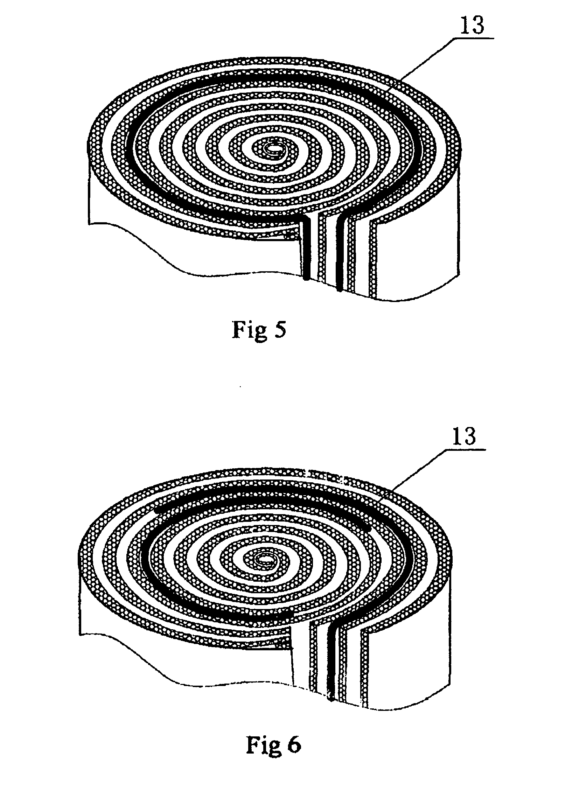

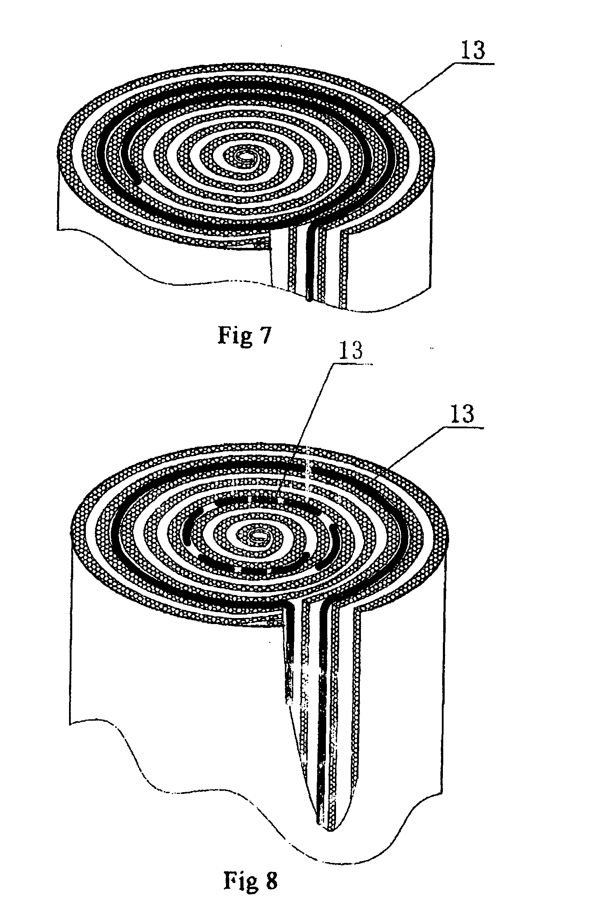

According to different requirements for the strength of the unit in use, the skeleton may be set in multiple modes. As shown in Figures 5-8, the skeleton 13 may be designed as a continuous skeleton set in single position of unit and as a single layer. The skeleton 13 may also be designed as a discontinuous skeleton set in multiple positions of unit and as a single layer. The skeleton 13 may also be designed as a continuous skeleton set in single position of unit and as multiple layers. Or two kinds of skeletons may be used in combination set in multiple places of unit and as a single layer. No matter how the skeleton is set, its setting position is always located in the clearance between any two layers of high porosity flaky materials 11 of unit.

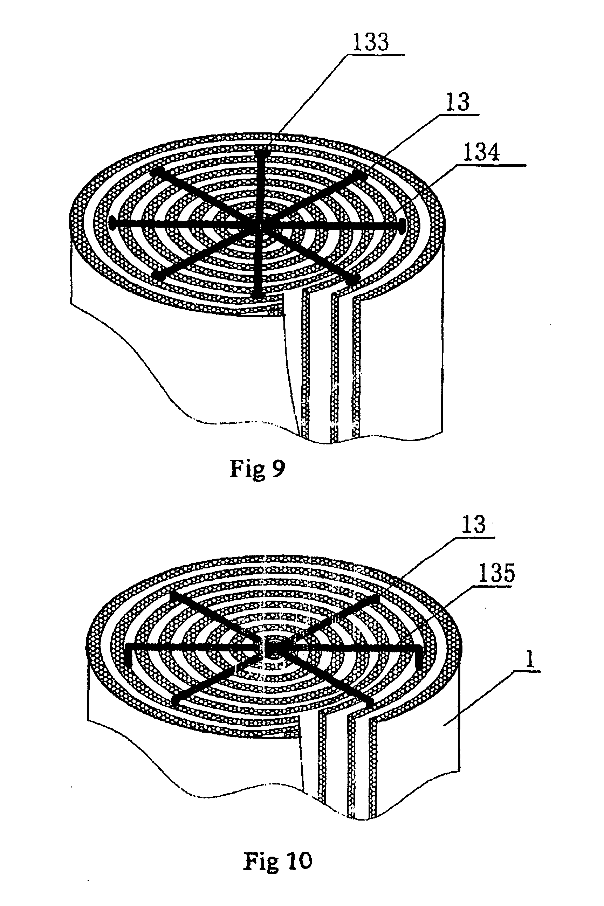

As shown in Figure 9, for the convenience in processing, the skeleton 13 may also be composed of an upright column 133 and a crossbeam 134. The upright column 133 is threaded between multilayer high porosity flaky materials 11 of the unit and protrudes from the upper and lower end faces of the unit, the crossbeam 134 and the upright column 133 shall be connected as an integral.

As shown in Figure 10, the skeleton 13 may also be composed of a plurality of frames 135. Each of the frames 135 is set between multilayer high porosity flaky materials 11 of the unit , and a plurality of frames 135 are interconnected at their tops and bottoms.

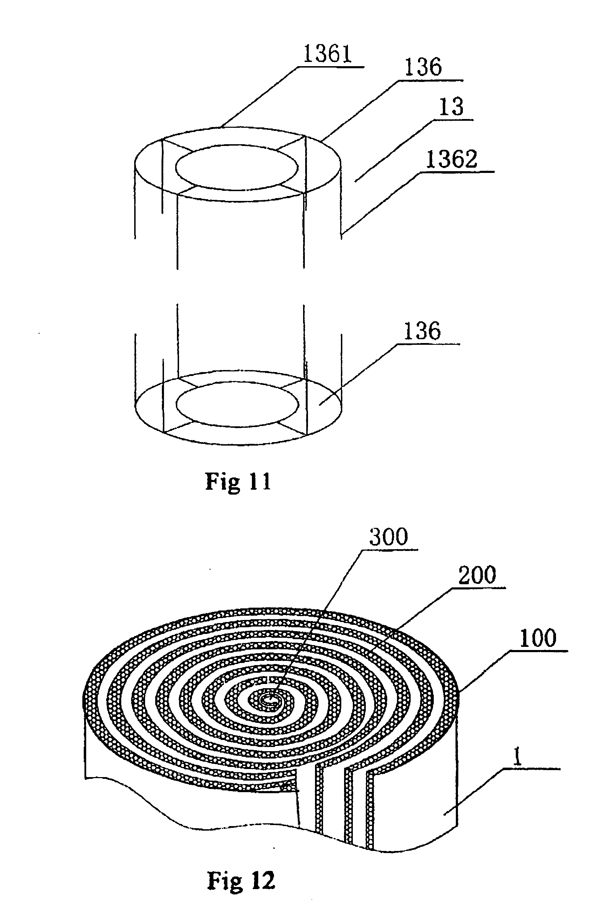

In addition to this , Figure 11 is the structure scheme of the fifth skeleton. As shown in Figure 11, the skeleton 13 may also be composed of two parts, i.e.y the upper and lower skeletons 136. The upper and lower skeleton respectively includes interconnected end frames 1361 and inserting frame 1362. The end frames 1361 are respectively set on the upper and lower end faces of the unit. The inserting frame 1362 is inserted and extended to the clearance between two layers of multilayer high porosity flaky materials 11 of the unit, so that the unit has adequate strength and elasticity.

According to different requirements for the positions where the explosion-proof material unit is filled in tank, the shape of explosion-proof material unit 1 may be cuboid or cube or polygonal column. Meanwhile, the high porosity flaky material 11 may be alloy material or materials acquired through metal/nonmetal coating technology, or their combination.

In addition to the explosion-proof material unit 1 as shown in Figure 2, Figure 12 is the overall structure scheme of the second explosion-proof material unit. As shown in Figure 12, the unit of explosion-proof material may include a core 300, which is a solid honeycomb skeleton formed by reticulated flexible polyurethane foam material and becomes the fixed supporting part. The explosion-proof material unit is a unit in the shape of cylinder, which is formed by winding the metal mesh 200 extended by tense machine around the core 300 and then winding and superposing multilayer reticular materials. In addition, it is also feasible to put the unit in the mould in which the polyurethane material will be foamed and pack the unit with the polyurethane to form the coating layer 100. Generally, the core may be made of expandable foaming material, and the winding mode of the metal mesh 200 is integral winding or partial winding. Or, the core 300 of the explosion-proof material unit is made of metal mesh and becomes the fixed supporting part. The outside of the core 300 is covered with expandable foaming material. Said expandable foaming material may be polyether, polycarboxylate or polyurethane.

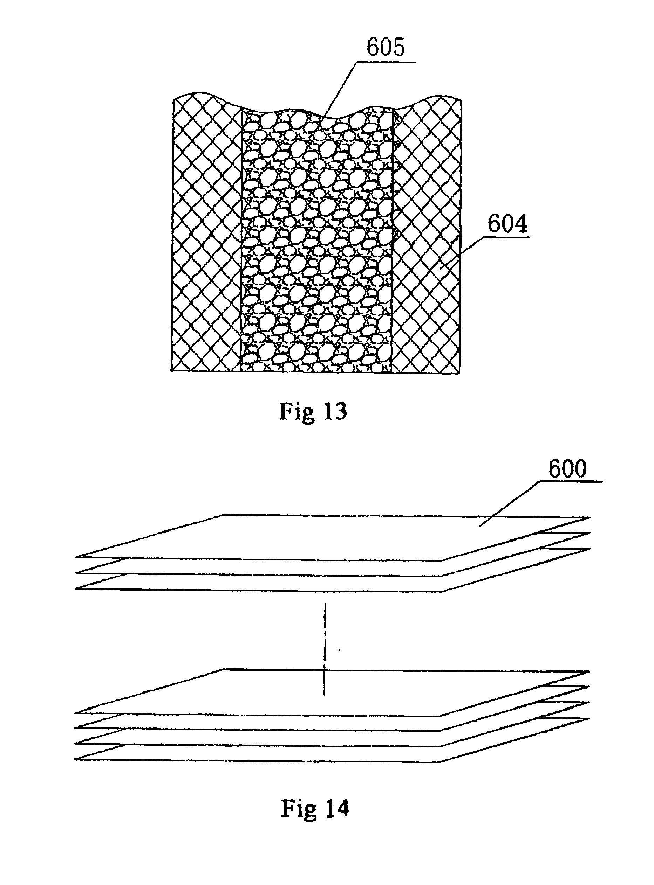

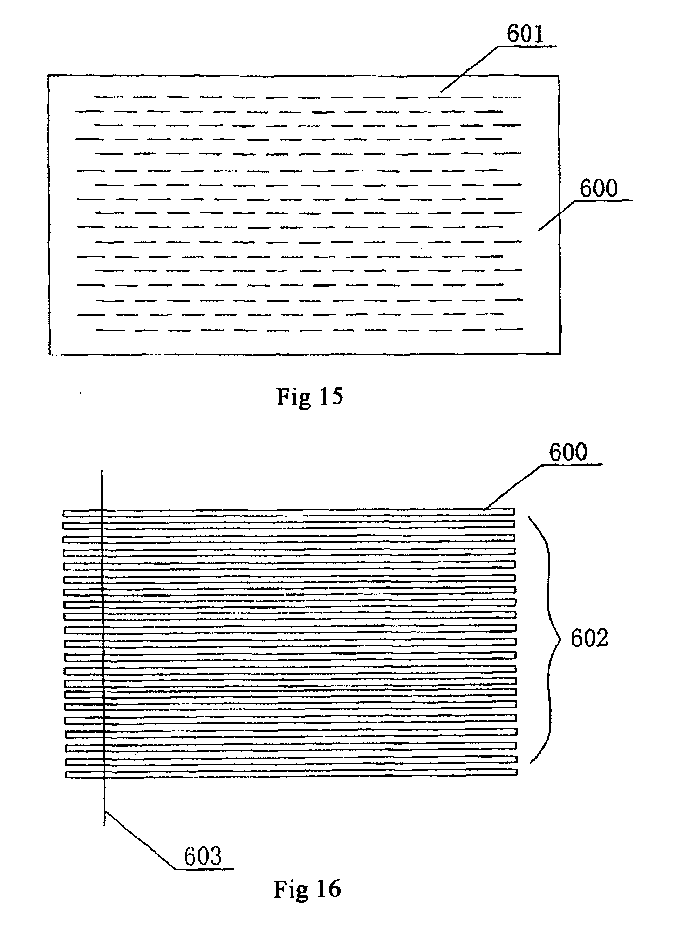

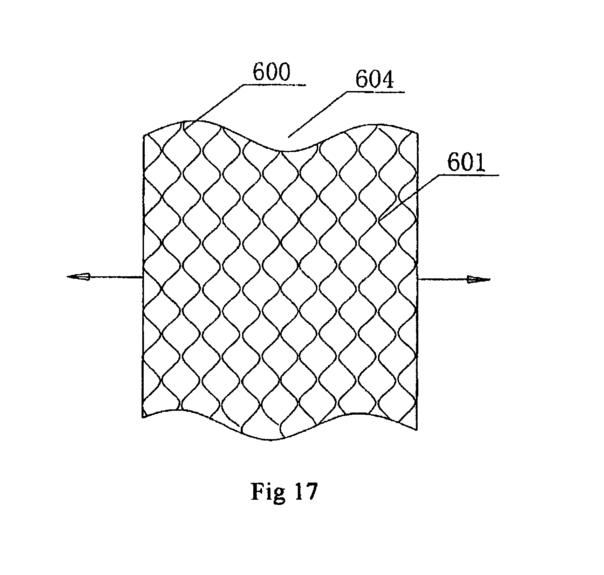

Figure 13 is the overall structure scheme of the third explosion-proof material unit. As shown in Figure 13, the third unit is designed as a structure in which the metal mesh winds the core made of expandable foaming material. The core body 605 made of material to be foamed is sandwiched between the metal meshes 604, and the core 605 acts as the fixed supporting part. This metal mesh 604 may be formed through different processing modes. The first kind of processing method for metal mesh is as follows: Through cutting, a flat layer of rolled metal raw material 600 is made into a grid-form semi-finished product material. Both sides of the grid-form semi-finished product material are gradually expanded outward and pulled into a honeycomb reticulation, thus forming a high porosity flaky metal mesh 200; The second kind of processing method for metal mesh refers to Figures 14-17. Figure 14 is the schematic diagram for bonding multi-layer flat original foil materials ; As shown in Figure 14, the upper and lower surfaces of two adjacent flat raw foil materials 600 are mutually bonded into multiple layers in turn; Figure 15 is the schematic diagram for setting the bonding points on each piece of flat original foil material ; As shown in Figure 15, the bonding points 601 on each piece of raw foil material 600 are set at equal distance interval in both horizontal and longitudinal directions. As shown in Figure 16, well-bonded multilayer flat raw metal material 602 is cut into strips in the same direction 603; Figure 17 is the structure scheme of a metal mesh ;As shown in Figure 17, the multilayer material is expanded along the direction being perpendicular to this cutting direction, the interval positions between the bonding points 601 are expanded into pores, so that high porosity flaky metal mesh 604 is formed. The metal meshes made by the above two processing methods have small differences in physical properties. The metal mesh processed by the second method has higher hardness and strength for guaranteeing the strength and elasticity of the explosion-proof material unit as shown in Figure 13.

It is noted that, the filling body N in this embodiment may also be used to fill the automobile oil tank with volume of 50 - 200 liter and can also achieve the explosion-proof effect in the same way. The portable storage tank and the automobile oil tank in this embodiment pertain to atmospheric single wall oil-storage tanks.

With respect to the portable explosion-proof storage tank or automobile oil tank provided by this embodiment, the explosion-proof material units are filled in the prefabricated frame to form a filling body. The fixed supporting part provided in the unit can effectively prevent the explosion-proof material from collapse and distortion and can enable the unit to have adequate strength and elasticity. The metal protective mesh covered on the outside of the unit can effectively prevent the fragments of explosion-proof material unit generated in use from being left in the tank body, so as to effectively prevent the unexpected explosion hazards that may be caused by naked flame, static electricity, welding, gunshot, collision and faulty operation. The intrinsic safety of oil oil-storage tank can be ensured.

### Embodiment 2

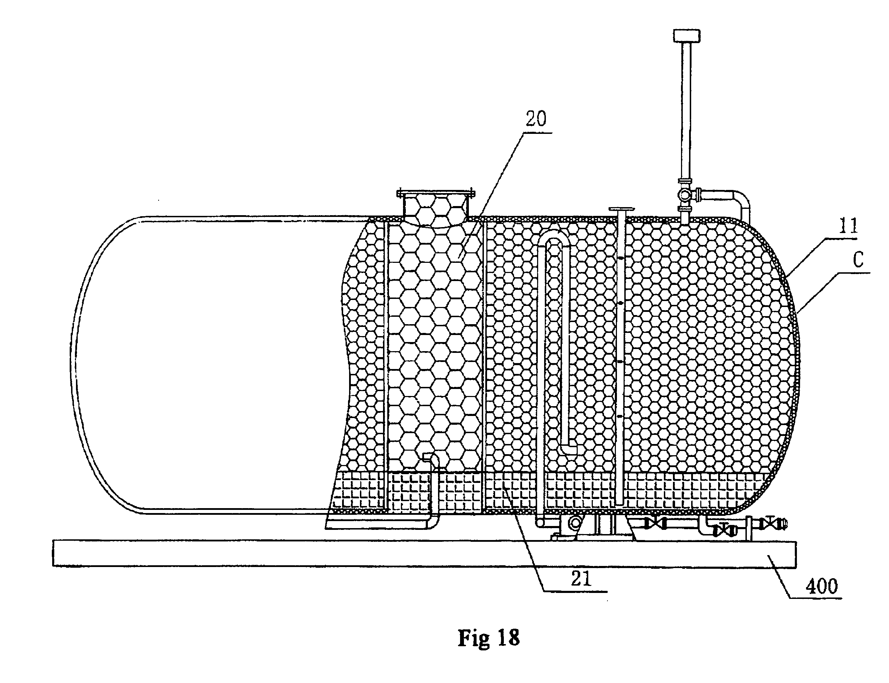

Figure 18 is the overall structure scheme of the atmospheric double-walled ground storage tank of embodiment 2 of present invention. As shown in Figure 18, embodiment 2 of the present invention provides a ground oil-storage tank. This storage tank C is a double-walled tank. The high porosity flaky material 11 is filled in the interlayer formed by two-layer of the tank walls. A vertical well 20 is provided in the tank body, and its top is set on the position corresponding to the manhole cover in the tank body. This vertical well 20 is a frame that vertically penetrates along the radial direction of the tank body, and its bottom is connected with the bottom-cleaning tunnel 21 set at the bottom of the tank body. A plurality of internal bladders (not shown in the Figure) are set in the frame of vertical well 20, with each of the internal bladder being filled with explosion-proof material units. A plurality of units of explosion-proof material are filled in the inner chamber of the storage tank around the vertical well layer by layer, until the inner space of the storage tank C is filled up.

As shown in Figure 18, a skid 400 is set on the outside of the storage tank C and forms the foundation of the storage tank C. The skid 400 may be fixed on different positions to form storage tank in different structure forms and may be moveable according to different position requirements. In practical assembly, the skid 400 may be fixed on an anti-collision foundation to form a ground type storage tank, or connected with the base of underground tank pool to form an underground storage tank, or connected with the fixed platform of vehicle body or ship hull to form a vehicle/ship mounted storage tank, or fixed on the inner bottom plate of a container to form a container type storage tank. The skid may also be fixed on an oil tanker to form a tanker- storage tank.

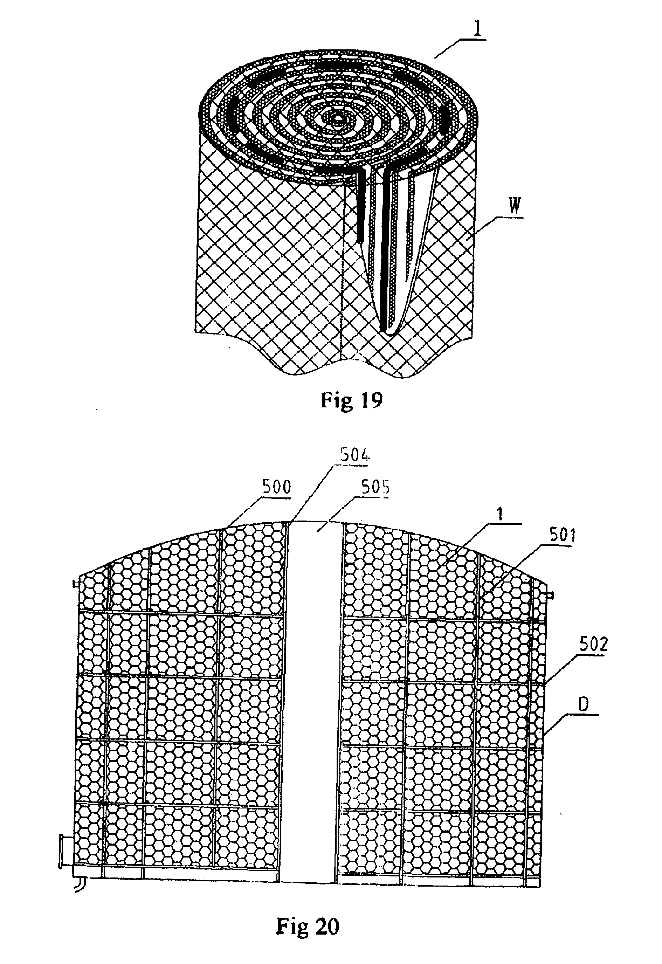

As shown in Figure 19, the unit 1 may also be covered with metal protective mesh W, which can effectively prevent the fragments generated by the explosion-proof material unit in use from being left in the tank body, prevent the fragments from blocking the oil pipeline and prevent the fragments from flowing into the pipeline of oil(gas) refueling machine, thus avoiding harmful effect. When a plurality of units 1 are filled in the inner chamber of storage tank C, two adjacent units may be interconnected to guarantee its stability or may be not interconnected. The connection between the adjacent units 1 can be achieved by the connection between skeletons or metal protective meshes.

With respect to the storage tank C provided by this embodiment referring to any structure shown in figures 2-11, the fixed supporting part provided in the explosion-proof material unit can effectively prevent the high porosity flaky material from collapse and distortion, so that the unit has adequate strength and elasticity. The metal protective mesh set on the outside of unit can effectively prevent the fragments generated by explosion-proof material unit in use from being left in the tank body, so as to effectively prevent the unexpected explosion hazards that may be caused by naked flame, static electricity, welding, gunshot, collision and faulty operation. So the intrinsic safety of the oil-storage tank can be ensured. Meanwhile, this explosion-proof storage tank is removable. By means of the skid under the storage tank, the storage tank may be fixed on different positions for saving floor area, facilitating disassembly and assembly and lowering costs.

Because this storage tank C is designed as a double walled tank structure, it can effectively overcome the leakage and leak of oil and/or gas, thus protecting the soil in the periphery of storage tank from serious damage and protecting the underground water resources from pollution. In addition, this storage tank C is filled with explosion-proof material units which can inhibit the volatilization of oil gas and effectively reduce the losses of petroleum products and the pollution caused by oil gas to the atmospheric environment. According to calculation, a medium-scale oil refueling station with annual sales volume of 5000 ton can annually reduce the losses of oil products by about 13 ton, thus bringing about considerable economic benefit. Therefore, this ground storage tank C is an environmental-protection product.

### Embodiment 3

Figure 20 is the overall structure scheme of the cylindrical oil-storage tank for large-scale oil storage of embodiment 3 of the present invention. As shown in Figure 20, this embodiment provides an oil-storage tank for large-scale oil storage. The oil-storage tank is a cylindrical storage tank D, in which a mounting support 500 is provided, with the shape and dimension of the mounting support 500 corresponding to the inner chamber of the storage tank D. This mounting support 500 is a solid gridiron composed of a plurality of supporting rods 501, the top of which is propped on the inner wall of the tank body by means of the propping mechanism 502. A plurality of explosion-proof material units 1 are orderly filled in the gridiron formed by mounting support 500, and a functional channel 505 is reserved in the mounting support. A sleeve 504 composed of perforated plates is set outside of the functional channel 505, and the internal space in the sleeve 504 can be used to accommodate such devices as process tube, dipping tube, the connecting rod of liquid level meter as well as the pipeline channel of buoy and breather valve and to prevent the channel from distortion caused by mutual extrusion between explosion-proof material units.

Explosion-proof material units 1 of any structure of figure 2-11 are filled in the gridiron of the storage tank for large-scale oil storage provided by this embodiment. As shown in Figure 19, the unit 1 is covered with a metal protective mesh W, which can effectively prevent the fragments generated by the explosion-proof material unit in use from being left. When a plurality of units 1 are filled in the inner chamber of the storage tank D, the adjacent units may be interconnected to guarantee its stability. The connection between the adjacent units 1 can be achieved through the connection between skeletons or metal protective meshes.

The storage tanks in large-scale oil storage are facilities with liability of explosion and fire hazards. Most of the fire hazards are caused by such reasons as static electricity, naked flame and lightning stroke. At the time of oil inletting to oil-storage tank, the oil gas in the tank is discharged to atmosphere and is very liable to cause combustion and/or explosion upon meeting naked flame. In case of combustion and/or explosion of an oil-storage tank, the top cover of the oil-storage tank is first blown off, an opening combustion is carried out at the top of the oil-storage tank, the upper oil-gas layer is ignited by the explosion, the oil layer in the tank quickly evaporates and forms a flame tongue with the air convection, and thus accelerating the active combustion of in-tank oil surface. In windy case, the flame of combustion will spread to the adjacent oil-storage tanks and causes the combustion and explosion of tank groups in the storage region. Large-scale ire is often difficult to be distinguished and poses an immense threat to the property and life safety and even causing irretrievable losses. Heavy smoke generated by fire will lead to serious pollution to peripheral environment. The explosion-proof storage tank for large-scale oil storage provided in this embodiment is equipped with explosion-proof material units. The explosion-proof material units are filled in each of gridiron from bottom to top and are filled up the inner chamber of the storage tank. In this way, the explosion-proof material units have the function to inhibit the volatilization of oil gas and thus prevent the hazardous chemicals medium in the storage tank from combustion and explosion.

### Embodiment 4

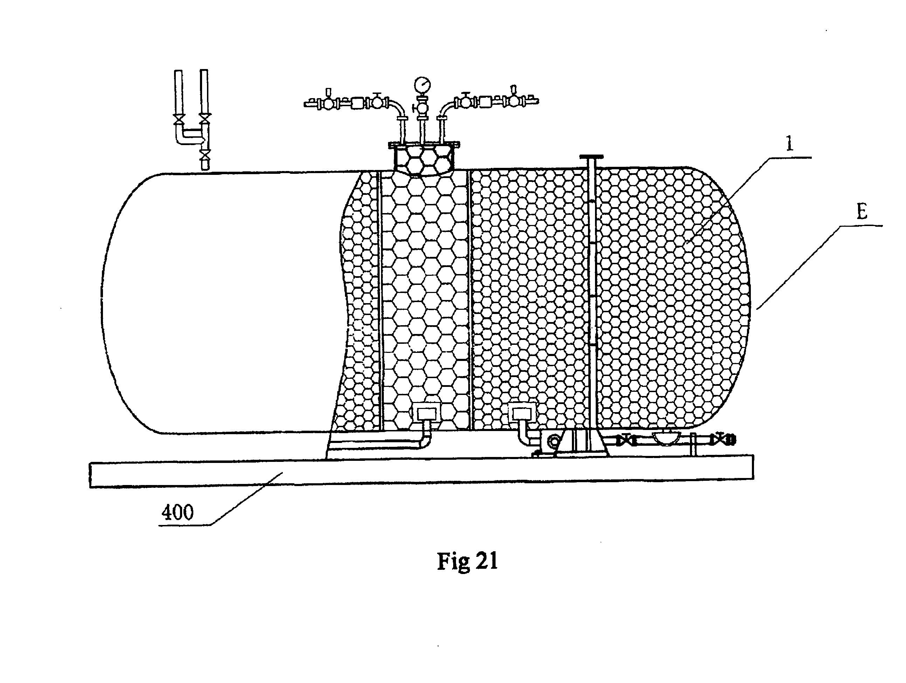

Figure 21 is the overall structure scheme of the pressure-bearing single wall gas storage tank of embodiment 4 of the present invention. As shown in Figure 21, the pressure-bearing single wall gas storage tank provided by this embodiment is a liquefied petroleum gas storage tank and pertains to small-type storage tank with volume less than 50 m³. It is a removable gas storage tank set above ground. According to requirement, the wall thickness of single wall tank must have pressure-bearing capacity. As shown in Figures 2-11, a plurality of units 1 are orderly filled up the inner chamber of the storage tank E. The filled explosion-proof material is composed of multilayer material units 1 made of high porosity flaky material; a fixed supporting part is set in the clearance of high porosity flaky material of the unit 1. This fixed supporting part is designed to fix and support the unit 1, and its structural characteristics have been described in detail in previous embodiment.

To facilitate the instillation of storage tank E under different operating environments, the storage tank E is provided with a skid 400 on its outside. The skid 400 can be fixed on anti-collision foundation to form a ground type storage tank. It may also be connected with a tunnel to form an underground storage tank. It may also be connected with the fixed platform of vehicle body or ship hull to form a vehicle/ship mounted storage tank. And it may also be fixed on the inner bottom plate of a container to form a container type storage tank. Therefore, the storage tank provided by this embodiment is also a removable type explosion-proof storage tank.

Due to different medium stored in the storage tank, said pressure-bearing single wall gas storage tank has certain limits for the pressure born by the storage tank wall. For example, the liquefied petroleum gas storage tank can bear the pressure of 1.8Mpa and the natural gas storage tank can bear the pressure of 20 - 30MPa. The structure of natural gas storage tank is about equal to that of liquefied petroleum gas storage tank, which has been shown in said text and figures. Therefore, it is unnecessary to go into details herein.

### Embodiment 5

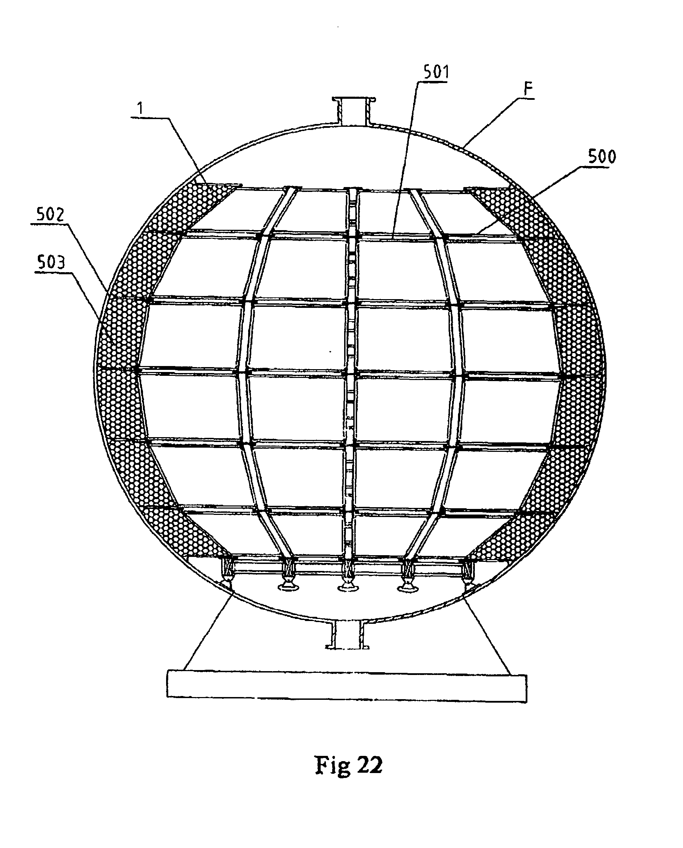

Figure 22 is the overall structure scheme of the large-scale liquefied petroleum gas explosion proof spherical tank of embodiment 5 of present invention. As shown in Figure 22, this spherical tank F is a pressure-bearing gas storage spherical tank, which can bear the pressure of 1.8MPa and has a diameter of 6 meters and storage volume of more than 400 m³. In the assembly process, a mounting support 500 is generally set inside the spherical tank F. The shape and the dimension of the mounting support 500 correspond to the inner chamber of the spherical tank F and form spherical frame. The mounting support 500 comprises a plurality of supporting rods 501 set on the inner wall of the spherical tank F. The ends of the supporting rods 501 are propped on the inner wall of spherical tank by means of the propping mechanism 502. The mounting support 500 is equipped with a metal grid (Not shown in the figure), and the explosion-proof material units 1 are fixed in the metal grid and filled in the annular explosion proof layer 503 that is formed between tank walls of the spherical tank F on the spherical frame. The filling thickness of this explosion proof layer 503 is determined according to the volume of tank body, and this filling method is referred to as annular space installation method. The explosion-proof material units 1 fixed in the metal grid may be any structure of figure 2-11. When partial area of the spherical tank F is heated by naked flame, due to the heat conduction of explosion-proof layer 503, the liquefied petroleum gas inside the tank body is evenly heated. In case of expansion of liquid in the tank body due to temperature increase, the expansion pressure is released out through the safety valve set in the tank body. Since the explosion-proof material has great metal surface and perfect heat-conducting property, the partial tank wall, after being heated, can quickly transfer the heat to the barrier explosion-proof material, and the barrier explosion-proof material can in turn transfer the heat to the medium in tank, so that the tank wall temperature, especially "dry wall" temperature, can be quickly reduced. In this way, the occurrence of" BLEVE" can be avoided and the safety of the tank body is ensured. In addition, the explosion-proof material in the tank can effectively prevent the tank wall and internal components from corrosion, extend the service life of spherical tank and thus ensure the safe operation of spherical tank.

It is noted that, with respect to the storage tanks of said embodiments, the material for tank body may be metal material, non-metal material or steel-plastic composite material. Generally, the metal storage tanks are made of 16MnR steel plates. Since the medium stored in the storage tanks are different, the storage tanks are approximately fallen into oil-storage tank and gas storage tank (may be compressed into liquid). The tanks may also be classified as atmospheric tank and pressure-bearing tank. Most of the underground oil-storage tanks used in domestic filling stations are atmospheric tanks, which are used to store light fuel - gasoline, kerosene and diesel oil etc. The metal storage tanks commonly used in refueling stations may be classified into 5, 10, 15, 20, 25 and 50M³ in volume. The characteristic of this kind of atmospheric tank is as follows: The automobile fuel stored in the tank (not including the liquid LPG used for automobile )may be connected with atmosphere through a breather valve.

The metal gas storage tanks are mainly used to store liquefied petroleum gas (LPG) that has been processed through deep cooling technology or compressed natural gas (CNG ) that has been processed through deep dehydration. This kind of storage tank is a high pressure storage tank, which is used to store liquefied petroleum gas (LPG ), with design pressure as 1.8 MPa. The natural gas ( CNG ) storage tank is used to store natural gas processed through multiple stages of compression, such natural gas is transferred into the tank through a removable pipe bundle type automobile. Generally, the pressure in tank is 20 - 30 MPa. For this kind of storage tank, the tank wall is required to have certain pressure resistant capability.

The non-metal storage tank may be all-plastic storage tank or steel-plastic composite storage tank without welding seam that is molded by polyethylene ( PE )at one step. The non-metal storage tank has a corrosion resistant tank body that is made of high density polyethylene and low density polyethylene using no-welding seam proprietary technology and rotational molding technology. This kind of storage tank is used to store various chemical liquids, especially the medium with strong corrosion and high hazards. The steel-plastic composite storage tank ( integrating monolithic lining-steel, mesh and plastic into one ) is made in this way: Welding the steel mesh ( monolithic lining ) on the steel body surface, and the raw material of polyethylene is molded on the steel body surface at one step using rotational molding plastic technology. Since the steel mesh and the polyethylene have been made into an integrated structure, as compared with the traditional steel liner plastic and steel liner fiberglass reinforced plastics, this steel-plastic composite storage tank has a perfect corrosion resistance, abrasion resistance performance and long service life without leakage. The tank can be used to ship corrosion product and have applications in automobile transport tank, reaction kettle and pickling tank with temperature over 100°C. Especially, the non-metal storage tanks are of value of extensive use for storing such medium of inflammable and explosive liquid and dangerous chemicals.

Finally it must be mentioned said embodiments are merely used to describe rather than limit the present invention. Although detailed description of the present invention is provided with reference to preferred embodiments, the skilled in the art understand that any of the modification or equitable substitution could be made to the present invention.

## Claims

1. An explosion-proof storage tank comprises a tank body, in which and inner chamber of the tank body is filled with an explosion-proof material, said explosion-proof material being multi-layer explosion-proof material unit (1) made of high porosity material, a fixed supporting part being provided in the unit (1) to fix and support the unit, a plurality of units being orderly filled in the inner chamber of the storage tank ;
said units (1) being made of high porosity flaky materials, characterized as said fixed supporting part being a skeleton (13) set in the clearance between two layers of high porosity flaky materials (11) of the units (1) and the skeleton (13) being designed for fixing and supporting the unit (1).

2. The explosion-proof storage tank of Claim 1, wherein said skeleton (13) is composed of interweaved supporting frame (131) and reinforcing ring (132), the reinforcing ring (132) being threaded in the middle of the supporting frame (131) and mutually fixed with it, with the shape of skeleton (13) corresponding to that of the unit (1);
or said skeleton (13) is composed of an upright column (133) and a crossbeam (134), the upright column (133) being threaded between multilayer high porosity flaky materials (11) of the units (1) and protruding from the upper and lower end faces of the unit (1), and the crossbeam being connected with the parts of the upright column (133) protruding from the upper and lower end faces of the unit (1);
or said skeleton (13) is composed of a plurality of frames (135), each of the frames (135) being set between multilayer high porosity flaky materials (11) of the unit (1), and a plurality of frames (135) being mutually connected at their tops and bottoms;
or said skeleton (13) may be composed of two parts, namely the upper and lower skeletons (136), these upper and lower skeletons (136) respectively including interconnected end frames (1361) and inserting frames (1362), the end frames (1361) being respectively set on the upper and lower end faces of the unit, and the inserting frames (1362) being inserted and extended to the clearance between two layers of multilayer high porosity flaky materials (11) of the unit, so as to fix and support the unit (1).

3. The explosion-proof storage tank of any one of Claims 1-2, wherein said units (1) is covered with a metal protective mesh (604).

4. The explosion-proof storage tank of Claim 3, wherein said storage tank is an atmospheric storage tank, a portable storage tank with volume of 5 - 25 liter or an automobile oil tank with volume of 50 - 200 liters;
a prefabricated frame is provided in the inner chamber of the portable storage tank or the automobile oil tank, the shape and the dimension of the prefabricated frame corresponding to the inner chamber of the portable storage tank or the automobile oil tank, explosion-proof material units (1) being filled in the prefabricated frame to form a filling body (N) in which a functional channel (N1) is reserved;
the inner wall of said functional channel (N1) is provided with sleeve (N2) with sieve meshes (N3) to facilitate the circulation of the medium.

5. The explosion-proof storage tank of Claim 3, wherein said storage tank is an atmospheric double-walled tank, a high porosity flaky material (11) being filled in the interlayer composed of the two-layer tank walls, a vertical well being provided in said tank body, the top of the vertical well being set on the position corresponding to manhole cover in the tank body, the vertical well being a frame that vertically penetrates along the radial direction of the tank body, the bottom of the vertical well being connected with a cleaning tunnel set at the bottom of the tank body, a plurality of internal bladders being set in the frame of the vertical well, and each of the internal bladder being filled with the units, a plurality of the units being filled in the chamber of storage tank around the vertical well, with two adjacent units being interconnected or not connected.

6. The explosion-proof storage tank of Claim 5, wherein said storage tank (C) is set with a skid (400) on its outside, by means of the skid, the storage tank (C) being fixed on an anti-collision foundation to form a ground type storage tank, by means of the skid, the storage tank being connected with a base of underground tank pool to form an underground storage tank, by means of the skid, said storage tank being connected with a fixed platform of vehicle body or ship hull to form a vehicle/ship mounted storage tank, by means of the skid, said storage tank being fixed on an inner bottom plate of a container to form a container type storage tank, or, by means of the skid, said storage tank being fixed on the transport tanker to form a tanker- storage tank.

7. The explosion-proof storage tank of Claim 3, wherein said storage tank is an atmospheric cylindrical storage tank (D) for large-scale oil storage region, a mounting support (500) being set inside the storage tank (D), the shape and the dimension of the mounting support (500) corresponding to the inner chamber of the storage tank (D), the mounting support being (500) composed of a plurality of supporting rods (501) to form a gridiron, the explosion-proof material units (1) being filled in the gridiron, the top of the supporting rod (501) being firmly propped on the inner wall of the tank body, a plurality of units being orderly fixed on the gridiron of the mounting support (500), a functional channel (505) being reserved in the inner chamber of the storage tank (D);
a sleeve (504) composed of perforated plates is set in the functional channel (505), and the internal space in the sleeve (504) being used to accommodate such devices as process tube, dipping tube, the connecting rod of liquid level meter as well as the pipeline channel of buoy and breather valve.

8. The explosion-proof storage tank of any one of Claims 4, 5 or 7, wherein said atmospheric tank body is made of metal material non-metal material or steel-plastic composite material.

9. The explosion-proof storage tank of Claim 3, wherein the tank is a pressure-bearing single wall storage tank, said storage tank being a small-type pressure bearing storage tank with volume less than 50 m³, and a plurality of explosion-proof material units (1) being orderly filled in the inner chamber of the storage tank and filled up the inner chamber of the storage tank. 3

10. The explosion-proof storage tank of Claim 3, wherein said storage tank is a large-scale pressure-bearing spherical tank (F), the mounting support (500) being provided, with its shape and dimension being set corresponding to the inner chamber of the spherical tank (F); the mounting support (500) being composed of a plurality of installation supporting rods (501), with the end of each installation supporting rod (501) being firmly propped on the inner wall of the storage tank (F), with a metal grid being set on the mounting support, a plurality of the units being orderly fixed on the metal grid of mounting support (501), filled in the space between mounting support (501) and the inner walls of storage tank (F) to form a spherical annular explosion proof layer (503).

11. The explosion-proof storage tank of Claim 3, wherein said storage tank is a pressure-bearing single wall liquefied petroleum gas storage tank, which can bear the pressure of 1.8MPa.

12. The explosion-proof storage tank of Claim 3, wherein said storage tank is a pressure-bearing single wall natural gas storage tank, which can bear the pressure of 20 - 30MPa.

## Patentansprüche

1. Ein explosionssicherer Lagertank umfasst einen Tankkörper, bei welchem eine innere Kammer des Tankkörpers mit einem explosionssicheren Material gefüllt ist, wobei das explosionssichere Material eine mehrschichtige explosionssichere Materialeinheit (1) aus einem sehr porösem Material ist, wobei ein festgelegtes Stützteil in der Einheit (1) vorgesehen ist, um die Einheit festzulegen und zu stützen, wobei eine Vielzahl von Einheiten ordnungsgemäß in die innere Kammer des Lagertanks gefüllt werden;
wobei die Einheiten (1) aus sehr porösen flockigen bzw. schuppigen Materialien sind,
**dadurch gekennzeichnet, dass** das festgelegte Stützteil ein Skelett (13) ist, welches in dem Freiraum zwischen zwei Schichten von sehr porösen flockigen Materialien (11) der Einheiten (1) angeordnet ist, und das Skelett (13) zum Festlegen und Stützen der Einheit (1) ausgelegt ist.

2. Explosionssicherer Lagertank nach Anspruch 1, wobei das Skelett (13) aus einem verwobenen Stützrahmen (131) und verstärkenden Ring (132) besteht, wobei der verstärkende Ring (132) in der Mitte des Stützrahmens (131) eingefädelt ist und damit gegenseitig festgelegt ist, wobei die Form des Skeletts (13) der der Einheit (1) entspricht;
oder das Skelett (13) aus einer aufrechten Säule (133) und einem Querbalken (134) besteht, wobei die aufrechte Säule (133) zwischen mehrschichtigen sehr porösen flockigen Materialien (11) der Einheiten (1) eingefädelt ist und von den oberen und unteren Stirnflächen der Einheit (1) vorsteht, und der Querbalken mit den Teilen der aufrechten Säule (133), welche von der oberen und unteren Stirnseite der Einheit (1) vorstehen, verbunden ist;
oder das Skelett (13) aus einer Vielzahl von Rahmen (135) besteht, wobei jeder der Rahmen (135) zwischen mehrschichtigen sehr porösen flockigen Materialien (11) der Einheit (1) angeordnet ist, und eine Vielzahl von Rahmen (135) gegenseitig an ihren Ober- und Unterseiten verbunden sind; oder das Skelett (13) aus zwei Teilen bestehen kann, nämlich dem oberen und unteren Skelett (136), wobei das obere und untere Skelett (136) jeweils miteinander verbundene Endrahmen (1361) und Einführrahmen (1362) beinhalten, wobei die Endrahmen (1361) jeweils an den oberen und unteren Stirnflächen der Einheit angeordnet sind, und die Einführrahmen (1362) in den Freiraum zwischen zwei Schichten der mehrschichtigen sehr porösen flockigen Materialien (11) der Einheit eingeführt und erstreckt werden, um die Einheit (1) festzulegen und zu stützen.

3. Explosionssicherer Lagertank nach einem der Ansprüche 1-2, wobei die Einheit (1) mit einem metallischen Schutznetz (604) bedeckt ist.

4. Explosionssicherer Lagertank nach Anspruch 3, wobei der Lagertank ein atmosphärischer Lagertank, ein tragbarer Lagertank mit einem Volumen von 5-25 Litern oder ein Automobilöltank mit einem Volumen von 50-200 Litern ist;
ein vorgefertigter Rahmen in der inneren Kammer des tragbaren Lagertanks oder des Automobilöltanks vorgesehen ist, wobei die Form und die Abmessungen des vorgefertigten Rahmens der inneren Kammer des tragbaren Lagertanks oder des Automobilöltanks entsprechen, wobei die explosionssicheren Materialeinheiten (1) in den vorgefertigten Rahmen gefüllt werden, um einen Füllkörper (N) zu bilden, in welchem ein funktionaler Kanal (N1) reserviert ist;
die innere Wand des funktionalen Kanals (N1) mit einer Hülle (N2) mit Siebmaschen (N3) versehen ist, um die Zirkulation des Mediums zu erleichtern.

5. Explosionssicherer Lagertank nach Anspruch 3, wobei der Lagertank ein atmosphärischer doppelwandiger Tank ist, wobei ein sehr poröses flockiges Material (11) in die Zwischenschicht, welche aus den Zwei-Schicht-Tankwänden besteht, gefüllt wird, wobei eine vertikale Senke in dem Tankkörper vorgesehen ist, wobei die Oberseite der vertikalen Senke an der Position angeordnet ist, welche einem Schachtdeckel in dem Tankkörper entspricht, wobei die vertikale Senke ein Rahmen ist, welcher vertikal entlang der radialen Richtung des Tankkörpers durchdringt, wobei der Boden der vertikalen Senke mit einem Reinigungstunnel verbunden ist, welcher am Boden des Tankkörpers angeordnet ist, wobei eine Vielzahl von inneren Blasen in dem Rahmen der vertikalen Senke angeordnet ist, und jede der inneren Blasen mit den Einheiten gefüllt ist, wobei eine Vielzahl der Einheiten in die Kammer des Lagertanks um die vertikale Senke gefüllt werden, wobei zwei aneinander angrenzende Einheiten miteinander verbunden oder nicht verbunden sind.

6. Explosionssicherer Lagertank nach Anspruch 5, wobei der Lagertank (C) mit einem Gestell (400) an seiner Außenseite angeordnet ist, wobei der Lagertank (C) durch das Gestell auf einem Kollisionsschutzfundament festgelegt ist, um einen Lagertank vom Bodentyp zu bilden, wobei der Lagertank durch das Gestell mit einer Basis eines unterirdischen Tankpools verbunden ist, um einen unterirdischen Lagertank zu bilden, wobei der Lagertank durch das Gestell mit einer feststehenden Plattform eines Fahrzeugkörpers oder Schiffrumpfs verbunden ist, um einen in einem Fahrzeug/Schiff installierten Lagertank zu bilden, wobei der Lagertank durch das Gestell an einer inneren Bodenplatte eines Behälters befestigt ist, um einen Lagertank vom Containertyp zu bilden, oder wobei der Lagertank durch das Gestell an dem Transporttanker festgelegt ist, um einen Tanker-Lagertank zu bilden.

7. Explosionssicherer Lagertank nach Anspruch 3, wobei der Lagertank ein atmosphärischer zylindrischer Lagertank (D) ist für einen Öllagerbereich im großen Maßstab, wobei eine Installationsstütze (500) in dem Lagertank (D) angeordnet ist, wobei die Form und die Abmessungen der Installationsstütze (500) der inneren Kammer des Lagertanks (D) entsprechen, wobei die Installationsstütze (500) aus einer Vielzahl von Stützstäben (501) besteht, um einen Gitterrost zu bilden, wobei die explosionssicheren Materialeinheiten (1) in den Gitterrost gefüllt werden, wobei die Oberseite des Stützstabs (501) fest an der inneren Wand des Tankkörpers abgestützt ist, wobei eine Vielzahl von Einheiten ordnungsgemäß an dem Gitterrost der Installationsstütze (500) festgelegt sind, wobei ein funktionaler Kanal (505) in der inneren Kammer des Lagertanks (D) reserviert ist;
wobei eine Hülse (504) bestehend aus perforierten Platten in dem funktionalen Kanal (505) angeordnet ist, und der innere Raum in der Hülse (504) verwendet wird, um Vorrichtungen, wie einen Prozessschlauch, einen Eintauchschlauch, den Verbindungsstab eines Flüssigkeitspegelmessgeräts sowie den Pipelinekanal eines Bojen- bzw. Auftriebs- und Entlüftungsventils, aufzunehmen.

8. Explosionssicherer Lagertank nach einem der Ansprüche 4, 5 oder 7, wobei der atmosphärische Tankkörper aus einem metallischen Material, nichtmetallischen Material oder Stahl-Kunststoff-Material ist.

9. Explosionssicherer Lagertank nach Anspruch 3, wobei der Lagertank ein Druck standhaltender einwandiger Lagertank ist, wobei der Lagertank ein kleiner, Druck standhaltender einwandiger Tank mit einem Volumen von weniger als 50m³ ist, und wobei eine Vielzahl von explosionssicheren Materialeinheiten (1) ordnungsgemäß in die innere Kammer des Lagertanks gefüllt werden und die innere Kammer des Lagertanks auffüllen.

10. Explosionssicherer Lagertank nach Anspruch 3, wobei der Lagertank ein großer, Druck standhaltender sphärischer Tank (F) ist, wobei die Installationsstütze (500) vorgesehen ist, wobei ihre Form und Abmessungen entsprechend der inneren Kammer des sphärischen Tanks (F) angeordnet sind; wobei die Installationsstütze (500) aus einer Vielzahl von Installationsstützstäben (501) besteht, wobei das Ende jedes Installationsstützstabs (501) fest an der inneren Wand des Lagertanks (F) abgestützt ist, wobei ein metallisches Gitter an der Installationsstütze angeordnet ist, wobei eine Vielzahl der Einheiten ordnungsgemäß an dem metallischen Gitter der Installationsstütze (501) festgelegt ist, welche in den Raum zwischen der Installationsstütze (501) und den inneren Wänden des Lagertanks (F) gefüllt werden, um eine sphärische, ringförmige explosionssichere Schicht (503) zu bilden.

11. Explosionssicherer Lagertank nach Anspruch 3, wobei der Lagertank ein Druck standhaltender einwandiger Lagertank für verflüssigtes Erdölgas ist, welcher einem Druck von 1,8 MPa standhalten kann.

12. Explosionssicherer Lagertank nach Anspruch 3, wobei der Lagertank ein Druck standhaltender einwandiger Lagertank für Erdgas ist, welcher einem Druck von 20-30 MPa standhalten kann.

## Revendications

1. Réservoir de stockage à l'épreuve des explosions, comprenant un corps de réservoir dans lequel une chambre intérieure du corps de réservoir est remplie avec un matériau à l'épreuve des explosions, ledit matériau à l'épreuve des explosions étant une unité matérielle (1) multicouches à l'épreuve des explosions faite d'un matériau à haute porosité, une partie de support fixe étant prévue dans l'unité (1) pour fixer et supporter l'unité, une pluralité d'unités étant remplies dans l'ordre dans la chambre intérieure du réservoir de stockage ; lesdites unités (1) étant faites de matériaux lamellaires de haute porosité, **caractérisé en ce que** ladite partie de support fixe est une ossature (13) placée dans l'intervalle entre deux couches de matériaux lamellaires de haute porosité (11) des unités (1), et l'ossature (13) étant conçue pour fixer et supporter l'unité (1).

2. Réservoir de stockage à l'épreuve des explosions selon la revendication 1, dans lequel ladite ossature (13) est composée d'un cadre de support (131) et d'une bague de renforcement (132) entrelacés, la bague de renforcement (132) étant enfilée au milieu du cadre de support (131) et fixée mutuellement avec celui-ci, et la forme de l'ossature (13) correspondant à celle de l'unité (1) ;
ou bien ladite ossature (13) est composée d'une colonne verticale (133) et d'une poutre transversale (134), la colonne verticale (133) étant enfilée entre les matériaux lamellaires (11) multicouches de haute porosité des unités (1) et se projetant depuis les faces terminales supérieure et inférieure de l'unité (1), et la poutre transversale étant connectée avec les parties de la colonne verticale (133) qui se projettent depuis les faces terminales supérieure et inférieure de l'unité (1) ;
ou bien ladite ossature (13) est composée d'une pluralité de cadres (135), chacun des cadres (135) étant placé entre des matériaux lamellaires (11) multicouches de haute porosité de l'unité (1), et une pluralité de cadres (135) étant mutuellement connectés à leurs sommets et à leurs pieds ;
ou bien ladite ossature (13) peut être composée de deux parties, à savoir une ossature supérieure et une ossature inférieure (136), ces ossatures supérieure et inférieure (136) incluant respectivement des cadres d'extrémité interconnectés (1361) et des cadres insérés (1362), les cadres d'extrémité (1361) étant respectivement placés sur les faces terminales supérieure et inférieure de l'unité, et les cadres insérés (1362) étant insérés est en extension vers l'intervalle entre deux couches des matériaux lamellaires (11) multicouches de haute porosité de l'unité, de manière à fixer et supporter l'unité (1).

3. Réservoir de stockage à l'épreuve des explosions selon l'une quelconque des revendications 1 ou 2, dans lequel lesdites unités (1) sont couvertes avec un treillis protecteur en métal (604).

4. Réservoir de stockage à l'épreuve des explosions selon la revendication 3, dans lequel ledit réservoir de stockage est un réservoir de stockage atmosphérique, un réservoir de stockage portable avec un volume de 5 à 25 I, ou un réservoir de carburant automobile avec un volume de 50 à 200 1 ;
un cadre préfabriqué est prévu dans la chambre intérieure du réservoir de stockage portable ou du réservoir de carburant automobile, la forme et les dimensions du cadre préfabriqué correspondant à la chambre intérieure du réservoir de stockage portable ou du réservoir de carburant automobile, des unités de matériaux à l'épreuve des explosions (1) étant remplies dans le cadre préfabriqué pour former un corps de remplissage (N) dans lequel est réservé un canal fonctionnel (N1) ;
la paroi intérieure dudit canal fonctionnel (N1) est pourvue d'un manchon (N2) avec des treillis-cribles (N3) pour faciliter la circulation du milieu.

5. Réservoir de stockage à l'épreuve des explosions selon la revendication 3, dans lequel ledit réservoir de stockage est un réservoir atmosphérique à double paroi, un matériau lamellaire (11) de haute porosité étant rempli dans la couche intermédiaire composée des parois du réservoir à double couche, un puits vertical étant ménagé dans ledit corps de réservoir, le sommet du puits vertical étant placé sur une position correspondant à un couvercle avec trou d'homme dans le corps de réservoir, le puits vertical étant un cadre qui pénètre verticalement le long de la direction radiale du corps de réservoir, le pied du puits vertical étant connecté à un groupe de tunnels de nettoyage placés au fond du corps de réservoir, une pluralité de poches internes étant placées dans le cadre du puits vertical, et chacune des poches internes étant remplie avec les unités, une pluralité des unités étant remplies dans la chambre du réservoir de stockage autour du puits vertical, de sorte que deux unités adjacentes sont interconnectées ou ne sont pas connectées.

6. Réservoir de stockage à l'épreuve des explosions selon la revendication 5, dans lequel ledit réservoir de stockage (C) est placé avec un patin (400) sur son extérieur, le réservoir de stockage (C) étant fixé au moyen du patin sur une fondation anticollision pour former un réservoir de stockage du type au sol, le réservoir de stockage étant connecté au moyen du patin avec une base d'un groupe de réservoirs en sous-sol pour former un réservoir de stockage en sous-sol, ledit réservoir de stockage étant connecté au moyen du patin à une plate-forme fixe d'un corps de véhicule ou d'une coque de navire pour former un réservoir de stockage monté sur véhicule/navire, ledit réservoir de stockage étant fixé au moyen du patin sur une plaque inférieure intérieure d'un conteneur pour former un réservoir de stockage du type conteneur, ou bien ledit réservoir de stockage étant fixé au moyen du patin sur un navire de transport pour former un réservoir de stockage de navire.

7. Réservoir de stockage à l'épreuve des explosions selon la revendication 3, dans lequel ledit réservoir de stockage est un réservoir de stockage cylindrique atmosphérique (D) pour une région de stockage de carburant à grande échelle, un support de montage (500) étant placé à l'intérieur du réservoir de stockage (D), la forme et la dimension du support de montage (500) correspondant à la chambre intérieure du réservoir de stockage (D), le support de montage (500) étant composé d'une pluralité de barres de support (501) pour former une grille, les unités en matériau à l'épreuve des explosions (1) étant remplies dans la grille, le sommet de la barre de support (501) étant fermement monté sur la paroi intérieure du corps de réservoir, une pluralité d'unités étant fixées dans l'ordre sur la grille du support de montage (500), un canal fonctionnel (505) étant réservé dans la chambre intérieure du réservoir de stockage (D) ;
un manchon (504) composé de plaques perforées est placé dans le canal fonctionnel (505), et l'espace interne dans le manchon (504) étant utilisé pour recevoir des dispositifs tels qu'un tube de traitement, un tube plongeant, la barre de connexion d'un dispositif de mesure du niveau de liquide, ainsi que le canal d'un pipeline d'une bouée avec valve de purge.

8. Réservoir de stockage à l'épreuve des explosions selon l'une quelconque des revendications 4, 5 ou 7, dans lequel ledit corps de réservoir atmosphérique est réalisé en un matériau métallique, un matériau non métallique, ou un matériau composite acier/matière plastique.

9. Réservoir de stockage à l'épreuve des explosions selon la revendication 3, dans lequel le réservoir est un réservoir de stockage à paroi unique supportant une pression, ledit réservoir de stockage étant un réservoir de stockage supportant une pression, d'un type de petite taille avec un volume inférieur à 50 m³, et une pluralité d'unités de matériau à l'épreuve des explosions (1) étant remplies dans l'ordre dans la chambre intérieure d'une réservoir de stockage et remplissant entièrement la chambre intérieure du réservoir de stockage.

10. Réservoir de stockage à l'épreuve des explosions selon la revendication 3, dans lequel ledit réservoir de stockage est un réservoir sphérique supportant une pression (F) de grande échelle, le support de montage (500) étant prévu avec une forme et des dimensions choisies en correspondance de la chambre intérieure du réservoir sphérique (F) ; le support de montage (500) étant composé d'une pluralité de barres de support d'installation (501), l'extrémité de chaque barre de support d'installation (501) étant fermement montée sur la paroi intérieure du réservoir de stockage (F), une grille en métal étant placée sur le support de montage, une pluralité d'unités étant fixées dans l'ordre sur la grille en métal du support de montage (501), remplies dans l'espace entre le support de montage (501) et les parois intérieures du réservoir de stockage (F) pour former une couche à l'épreuve des explosions annulaire sphérique (503).

11. Réservoir de stockage à l'épreuve des explosions selon la revendication 3, dans lequel ledit réservoir de stockage est un réservoir de stockage de gaz de pétrole liquéfié à simple paroi et supportant une pression, qui est capable de supporter la pression de 1,8 MPa.

12. Réservoir de stockage à l'épreuve des explosions selon la revendication 3, dans lequel ledit réservoir de stockage est un réservoir de stockage de gaz naturel à simple paroi et supportant une pression, qui est capable de supporter la pression de 20 à 30 MPa.
